# EUROPEAN PATENT APPLICATION

(11) **EP 3 637 530 A1**
(43) Date of publication of application: **15.04.2020**
(21) Application number: 19202187.1
(22) Date of filing: 09.10.2019
(51) Int. Cl.: H01M 10/0567, H01M 10/0525, H01M 4/587

(54) **ELECTROLYTE FOR LITHIUM ION BATTERY AND LITHIUM ION BATTERY INCLUDING THE SAME**

(30) Priority: 10.10.2018 KR 20180120161
(71) Applicant: Industry-Academy Cooperation Corps. Of Sunchon National University, Jeollanam-do 57922 (KR)
(72) Inventor: PYO, Myoung-Ho, 57936 Suncheon-si (KR); PRABAKAR, Samuel Jayaraj Richard, 57940 Suncheon-si (KR); HAN, Su-Cheol, 57940 Suncheon-si (KR)
(74) Representative: Beck & Rössig European Patent Attorneys

(57) **Abstract**

The present invention relates to an electrolyte capable of greatly improving the capacity and rate performance of a graphite negative electrode of a non-aqueous electrolyte lithium ion battery, and a lithium ion battery including the electrolyte. The electrolyte according to the present invention includes an additive containing Ca(BH₄)₂, a lithium salt, and a non-aqueous organic solvent.

## Description

### BACKGROUND OF THE INVENTION

### 1. Field of the Invention

The present invention relates to an electrolyte capable of greatly improving the capacity and rate performance of a non-aqueous electrolyte lithium ion battery, and a lithium ion battery including the electrolyte.

### 2. Description of the Related Art

As electronic equipment has become smaller and more lightweight and portable electronic devices have been more commonly used, research on a secondary battery having a high energy density as a power source thereof has been actively conducted.

A lithium ion battery exhibits a discharge voltage that is twice or more higher than a typical battery using an alkaline aqueous solution, has a high energy density per unit weight, and is capable of being rapidly charged, and thus, is applied not only as a power source for a small mobile device, but also as a power source for an electric vehicle and an energy storage device (ESS).

As a positive electrode active material for such a lithium ion battery, a lithium metal oxide is used. As a negative electrode active material, a lithium alloy, crystalline or amorphous carbon, or a carbon composite is used. The active material is applied on a current collector to a suitable thickness and length, or the active material itself is applied in a film form to manufacture an electrode, and then wound or laminated together with a separator, which is an insulator, and then placed in a container and injected with an electrolyte to manufacture a secondary battery.

Graphite is the most stable allotrope of carbon, and is used as a negative electrode active material for a lithium ion battery. During charging and discharging, lithium ions are intercalated and de-intercalated as a graphite electrode of a negative electrode. At this time, the lithium ions are reacted with a carbon electrode to form a passivation film made of Li2CO3, LiF, Li2O, and the like on the surface of the negative electrode. The passivation film is called a solid electrolyte interface (SEI) film, and the SEI film formed at the beginning of charging prevents the reaction between lithium ions and a carbon negative electrode or other materials during charging and discharging, and serves as an ion tunnel to pass the lithium ions

A lithium ion battery currently in use which uses a graphite negative electrode implements a commercially required lifespan, but a capacity loss of about 50 % or more occurs by the formation of a SEI film even in a well-designed battery.

A SEI film which is dense and damage-free inhibits electronic tunneling and serves to inhibit the reduction in electrolyte, which is very important for the electrochemical stability of a battery. However, since an oxidation/reduction reaction occurring in the SEI film is complex and unclear, there is a difficulty in designing the SEI film. The ultimate goal of the designing of a SEI film is to achieve maximum reversible capacity (the reduction of irreversible capacity loss) and improve battery performance by reducing interface resistance.

As a related method, a method of artificially forming an SEI film on the surface of an electrode by adding a small amount of additive may be used. At this time, the additive used generally has a higher reduction potential than an electrolyte solvent, and thus, is reduced to form an insoluble product having desired physical properties before electrochemically reducing the solvent from the electrolyte.

As an additive for promoting the formation of an SEI film, generally, an organically polymerizable additive/reduction agent is used in a negative electrode for a lithium ion battery using a LiPF6-based carbonate electrolyte. Examples thereof may include an additive containing sulfur, a cyclic carbonate additive having an unsaturated bond, a cyclic carbonate additive having a halogen, and the like. In addition, as an inorganic additive, the use of a metal ion such as NaClO4, Mn(II), Co(II), Cu(II), Ni(II), Zn(II), and Pb(II) has been attempted.

By using the above-described additives, the capacity and rate properties of a battery have been improved. However, there is still much room for improvement.

### Prior Art Document

### [Patent Document]

(Patent Document 1) Korean Patent Laid-Open Publication No. 2018-0106973

### SUMMARY OF THE INVENTION

An object of the present invention is to provide an electrolyte capable of improving the reversible capacity and rate properties of a lithium ion battery and a lithium ion battery including the electrolyte.

An aspect of the present invention provides an electrolyte for a lithium ion battery, the electrolyte including an additive containing Ca(BH₄)₂, a lithium salt, and a non-aqueous organic solvent.

Another aspect of the present invention provides a lithium ion battery including a positive electrode, a negative electrode disposed at a predetermined interval from the positive electrode, and the electrolyte injected between the positive electrode and the negative electrode.

### BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.
Fig. 1 shows graphite used as a negative electrode active material and the x-ray diffraction pattern of the graphite after being charged and discharged in an electrolyte according to an embodiment of the present invention;
Fig. 2 shows X-ray photoelectron spectroscopy (XPS) analysis results with respect to a graphite negative electrode in a charged state in the electrolyte according to each of Example (denoted as 'a' in the figure) and Comparative Example 1 (denoted as 'b' in the figure) of the present invention;
Fig. 3 shows graphite (denoted as 'pristine' in the figure) used as a negative electrode active material and high resolution XPS analysis results with respect to a graphite negative electrode in a charged state in an electrolyte according to an embodiment (denoted as '+1% Ca(BF4)2' in the figure) of the present invention;
Fig. 4 shows the charging and discharging voltage profile of a battery using the electrolyte according to each of Example, Comparative Example 1, and Comparative Example 2 of the present invention;
Fig. 5 shows cycle properties evaluation results using the electrolyte according to each of Example and Comparative Example 1 of the present invention; and
Fig. 6 shows cycle properties evaluation results using the electrolyte according to Comparative Example 2 of the present invention.

### DETAILED DESCRIPTION OF EXEMPLARY EMBODIMENTS

Hereinafter, preferred embodiments of the present invention will be described in detail. Prior to the description, it will be understood that words or terms used in the specification and claims of the present invention shall not be construed as being limited to having the meaning defined in commonly used dictionaries. It will be further understood that the words or terms should be interpreted as having meanings that are consistent with their meanings in the context and the technical idea of the invention, based on the principle that an inventor may properly define the meaning of the words or terms to best explain the invention. Therefore, the configurations described in the embodiments described herein are merely preferred embodiments of the present invention, and are not intended to limit the technical idea of the present invention. Therefore, it should be understood that there may be various equivalents and modifications that may substitute the embodiments at the time of the present application.

### Electrolyte

An electrolyte according to the present invention includes an additive containing Ca(BH₄)₂, a lithium salt, and a non-aqueous organic solvent.

It is preferable that the Ca(BH₄)₂ contained in the additive is included in an amount of 0.5 wt% to 5.0 wt%, more preferably 0.7-3.0 wt%, and most preferably 0.8-2.0 wt% based on the total weight of the electrolyte in terms of the improvement in capacity and the improvement in rate properties.

In addition, the additive may further include an organic or inorganic additive in various forms known in the art in addition to Ca(BH₄)₂, if necessary.

The organic additive may be, for example, an additive containing sulfur, a cyclic carbonate additive having an unsaturated bond, a cyclic carbonate additive having a halogen, and the like. The additive containing sulfur may be a cyclic disulfonic acid ester such as methylene methane disulfonic acid ester (hereinafter, referred to as "MMDS"), ethylene methane disulfonic acid ester, and propylene methane disulfonic acid ester, a cyclic sulfonic acid ester such as sultone, a chain-type sulfonic acid ester such as methylene bisbenzene sulfonic acid ester, methylene bisphenyl methane sulfonic acid ester, and methylene bisethane sulfonic acid ester, and the like. In addition, the cyclic carbonate additive having an unsaturated bond may be vinyl carbonate, vinyl ethylene carbonate, methacrylic acid propylene carbonate, acrylic acid propylene carbonate, and the like. In addition, the cyclic carbonate additive having a halogen may be fluoroethylene carbonate, difluoroethylene carbonate, trifluoroethylene carbonate, chloroethylene carbonate, dichloroethylene carbonate, trichloroethylene carbonate, and the like.

In addition, the inorganic additive may be an inorganic material containing a metal ion such as NaClO₄, Mn(II), Co(II), Cu(II), Ni(II), Zn(II), Pb(II), and the like.

However, any additive may be used without being limited to the materials exemplified above as long as the additive may be used in a lithium ion battery.

In addition, when an additive is added in addition to Ca(BH₄)₂, in order to achieve a synergistic effect with Ca(BH₄)₂, each compound should be included in an amount of at least 0.01 wt% based on the total weight of the electrolyte. When the total weight of additives exceeds 10 wt%, the content of the organic solvent and the lithium salt may be relatively reduced to deteriorate the performance of a battery. Therefore, it is preferable that the additives are included within the 10 wt% range.

Any lithium salt may be used as the lithium salt without limitation as long as it is a lithium salt which may be typically used in a lithium secondary battery. For example, a negative ion of the lithium salt may be one or more selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, F₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

As the organic solvent, any material may be used without limitation as long as it is a material which is typically used in a lithium ion battery. For example, the organic solvent may be a typical organic solvent usable as a non-aqueous organic solvent for a lithium ion battery, such as a cyclic carbonate solvent, a linear carbonate solvent, an ester solvent, a ketone solvent, or the like. Any one thereof or a combination of two or more thereof may be used. The cyclic carbonate solvent may be, for example, one or a mixed solution of two or more selected from the group consisting of ethylene carbonate (EC), vinylene carbonate (VC), fluoroethylene carbonate (FEC), propylene carbonate (PC) and butylene carbonate (BC). In addition, the linear carbonate solvent may be one or a mixed solution of two or more selected from the group consisting of dimethyl carbonate (DMC), diethyl carbonate (DEC), dipropyl carbonate (DPC), ethyl methyl carbonate (EMC), methyl propyl carbonate (MPC), and ethyl propyl carbonate (EPC). In addition, the ester solvent may be one or a mixed solution of two or more selected from the group consisting of methyl acetate, ethyl acetate, propyl acetate, methyl propionate, ethyl propionate, γ-butyrolactone, γ-valerolactone, γ-caprolactone, σ-valerolactone, and ε-caprolactone. In addition, polymethylvinyl ketone and the like may be used as the ketone solvent.

In addition, the additive containing Ca(BH₄)₂ and included in the electrolyte according to the present invention forms an SEI film for improving the capacity and rate properties of a battery on the surface of graphite, so that it is preferable that the electrolyte according to the present invention is used for a lithium ion battery including a carbon-based negative electrode active material, and the carbon-based negative electrode active material preferably contains graphite.

### Lithium ion battery

A lithium ion battery according to the present invention includes a positive electrode, a negative electrode disposed spaced apart at a predetermined interval from the positive electrode, a separator interposed between the positive electrode and the negative electrode, and the electrolyte.

Any positive electrode may be used as the positive electrode without limitation as long as it is typically used in a lithium ion battery. For example, a positive electrode may be manufactured by mixing and stirring a positive electrode active material with a solvent, and if necessary, a binder, a conductive material, and a dispersant, to prepare a slurry, and then applying the slurry on a current collector of a metal material, followed by pressing and drying.

As the positive electrode active material, a lithium-containing transition metal oxide commonly used in a lithium ion battery may be used alone or in combination of two or more, but the present invention is not necessarily limited thereto. The lithium-containing transition metal oxide may be, for example, a composite oxide of lithium and cobalt, nickel, manganese, or the like.

Any positive electrode current collector may be used as the positive electrode without limitation as long as it has good conductivity, allows a slurry of a positive electrode active material to be easily bonded, and has no reactivity in a voltage range of a battery. Examples thereof may be aluminum (Al), nickel (Ni), and the like.

A solvent for forming the positive electrode may be an organic solvent such as N-methyl pyrrolidone (NMP), dimethyl formamide (DMF), acetone, and dimethyl acetamide, or water, and such solvent may be used alone or in combination of two or more thereof. The amount of the solvent to be used is sufficient if the solvent may dissolve and disperse the positive electrode active material, the binder, and the conductive material in consideration of an applying thickness of a slurry and preparing yield.

Any conductive material may be used as the conductive material without limitation as long as it is commonly used in a lithium ion battery. For example, artificial graphite, natural graphite, carbon black, acetylene black, Ketjen black, Denka black, thermal black, channel black, carbon fiber, metal fiber, aluminum, tin, bismuth, silicon, antimony, nickel, copper, titanium, vanadium, chromium, manganese, iron, cobalt, zinc, molybdenum, tungsten, silver, gold, lantanium, ruthenium, platinum, iridium, titanium oxide, polyaniline, polythiophene, polyacetylene, polypyrrole, or a mixture thereof may be used.

Any binder may be used as the binder without limitation as long as it is commonly used in a lithium ion battery. For example, polyvinylidene fluoride (PVdF), a copolymer of polyhexafluoropropylene-polyvinylidene fluoride (PVdF/HFP), poly (vinylacetate), polyvinyl alcohol, polyethylene oxide, polyvinyl pyrrolidone, polyvinyl pyridine, alkylated polyethylene oxide, polyvinyl ether, poly(methyl methacrylate), poly(ethyl acrylate), polytetrafluoroethylene (PTFE), polyvinylchloride, polyacrylonitrile, styrene-butadiene rubber, acryl nitrile-butadiene rubber, fluorine rubber, ethylene-propylene-diene monomer (EPDM), a sulfonated ethylene-propylene-diene monomer, carboxymethyl cellulose (CMC), regenerated cellulose, starch, hydroxypropyl cellulose, tetrafluoroethylene, or a mixture thereof may be used.

If necessary, the positive electrode may be added with a filling material. As the filling material, a composition which inhibits the expansion of the positive electrode may be selectively used, but the present invention is not particularly limited thereto as long as it is a fibrous material without causing a chemical change in a lithium ion battery. For example, an olefin-based copolymer such as polyethylene, polypropylene and the like, and fibrous material such as glass fiber, carbon fiber and the like are used.

The negative electrode may be manufactured through a typical method known in the lithium ion battery field. For example, a negative electrode may be manufactured by mixing and stirring a negative electrode active material with a solvent, and if necessary, a binder, a conductive material, and a dispersant, to prepare a slurry, and then applying the slurry on a current collector of a metal material, followed by pressing and drying.

The negative electrode active material includes a carbon-based material. For example, natural graphite, artificial graphite, soft carbon, hard carbon, and the like may be used.

The binder, the conductive material, the filling material included in the negative electrode may be applied in the same manner as applied to the positive electrode.

The negative electrode current collector is not particularly limited as long as it has conductivity without causing a chemical change in a battery as in the case of a positive electrode. For example, copper, stainless steel, aluminum, nickel, titanium, fired carbon, copper or stainless steel that is surface-treated with one of carbon, nickel, titanium, silver, and the like, and an aluminum-cadmium alloy may be used.

As the separator for insulating the positive electrode and the negative electrode between the electrodes, a polyolefin-based separator, which is typically used in a lithium ion battery, or a composite separator having an organic-inorganic composite layer formed on an olefin-based substrate, and the like, may be all used. However, as long as it is a material which may act as a separator of a lithium ion battery, the separator is not particularly limited to the examples described above.

After the positive electrode, the negative electrode, and the separator having the above-described configuration are received in a container such as a can or a pouch, an electrolyte may be injected thereto to manufacture a lithium ion battery. However, the present invention is not limited thereto. The exterior of a lithium secondary battery according to the present specification is not particularly limited.

### [Examples]

### Manufacturing of battery

In order to evaluate the properties of the electrolyte according to an embodiment of the present invention, a half cell was manufactured by a typical method known in the art.

Specifically, LiPF₆, which is a lithium salt, in an amount that allows the concentration thereof to be 1 M, an organic solvent prepared by mixing ethylene carbonate (EC) and dimethyl carbonate (DMC) at a volume ratio of 1:1, and 1 wt% of Ca(BF₄)₂ as an additive were mixed and stirred until completely dissolved to be used as a non-aqueous electrolyte for a lithium ion battery. Meanwhile, the additive Ca(BF₄)₂ was added in an amount of 0.5 wt% to 5 wt% based on the lithium salt LiPF₆ contained in the electrolyte.

An n-methylpyrrolidone solvent including 90 wt% of graphite (KS6L, 3-6 µm), 5 wt% of polyvinylidene fluoride (PVDF) as a binder, and 5 wt% of acetylene black as a conductive additive was used to prepare a slurry, and the slurry was applied on copper foil, and after the solvent was evaporated, the copper foil was punched to a a predetermined size to be used as a negative electrode. Lithium foil was used as a counter electrode, and Celgard 2502 microporous polypropylene film was used as a separator.

Using the electrolyte, the negative electrode, the counter electrode, and the separator, a coin cell (CR 2032) was manufactured. In order to evaluate the charge and discharge properties of the negative electrode, the cell was charged and discharged within the voltage range of 0.0-3.0 V vs. Li/Li⁺.

### [Comparative Example 1]

For comparison with Example of the present invention, a coin cell was manufactured in the same manner as in Example except that Ca(BF₄)₂ and LiBF₄, which are additives, were not included in the electrolyte.

### [Comparative Example 2]

For comparison with Example of the present invention, a coin cell was manufactured in the same manner as in Example except that Ca(BF₄)₂ was not included but 1 wt% of LiBF₄ was included as an additive.

### Analysis of structure

First, an analysis was conducted as to whether any changes occurred in the graphite negative electrode according to the change in the electrolyte.

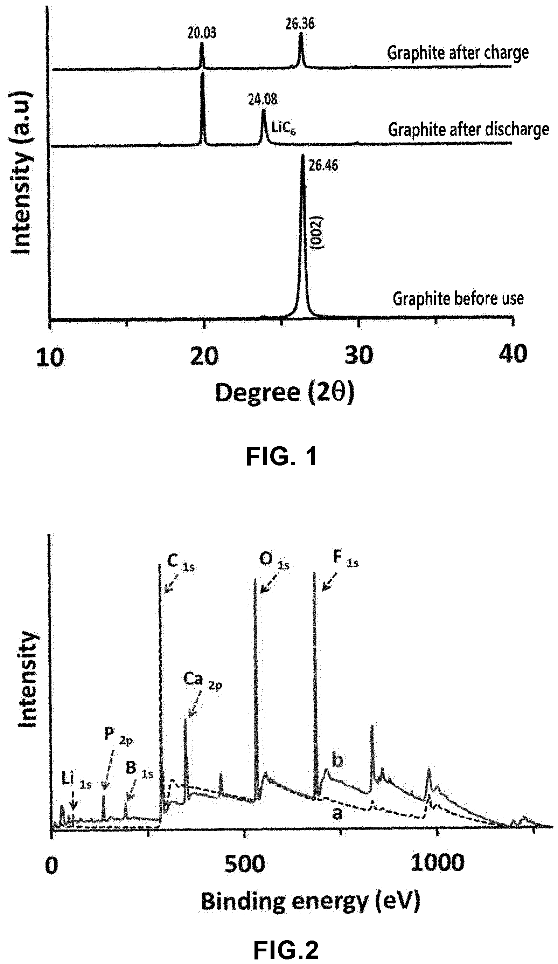

To this end, the coin cell initially adjusted by discharge and charge was decomposed in an argon-filled glove box to separate the graphite negative electrode, and an ex-situ X-ray diffraction analysis was performed. Fig. 1 shows the XRD pattern of the negative electrode before being adjusted by discharge and charge, and the XRD pattern of the negative electrode adjusted by discharge and charge in the electrolyte according to the embodiment of the present invention.

As confirmed with reference to Fig. 1, the XRD pattern of the negative electrode in the discharged shows two distinct peaks at 2 θ of 20.03 ° and 24.08 °, unlike a (002) peak observed in the negative electrode before being adjusted in the electrolyte. The peak at 24.08 ° coincides with Step 1 (Stage 1) of graphite intercalated with lithium forming LiC₆. However, a new peak at 20.03 ° is not common in the graphite intercalated with lithium, and it was confirmed that the peak was caused by the intercalation of Ca²⁺ ions having an interlayer distance of about 4.4 Å. In addition, during charging, as a typical lithium de-intercalation was observed, the (002) peak was restored, but a peak was still observed at 20.03 °. Some reduction in the size of remaining peaks means that there was partial trapping with the de-intercalation of Ca²⁺ ions, which indicates that the graphite structure was re-aligned.

Fig. 2 shows the results of the XPS analysis performed on the graphite negative electrode after the initial adjustment by discharge and charge in the electrolyte according to each of Comparative Example 1 and Example.

As confirmed with reference to Fig. 2, in the graphite negative electrode initially adjusted in the electrolyte of Example, Ca and B were present, which means that a significant amount of Ca²⁺ ions were present in the graphite negative electrode and Ca was intercalated into an SEI film. Also, the presence of a trace amount of boron indicates the reduction decomposition of BF⁴⁻ anions on the surface of the negative electrode and the inclusion of B in the formed SEI film.

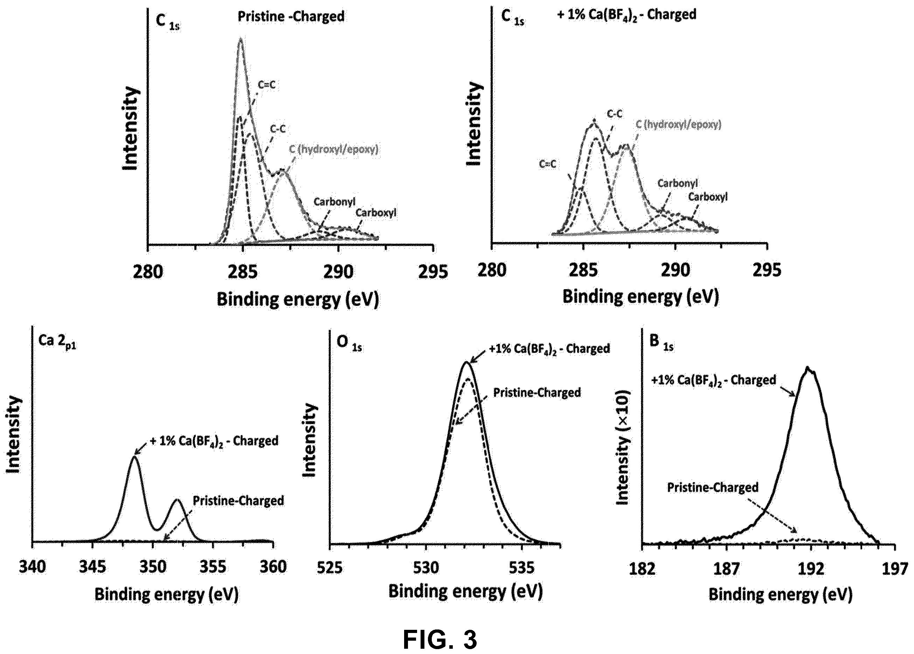

Fig. 3 shows the results of high resolution XPS (HR-XPS) analysis of the graphite negative electrode in the charged state. As confirmed with reference to Fig. 3, there was a significant difference in the elemental composition in the charged state. Through the HR-XPS scan of Ca₂ₚ and B₁ₛ, it was confirmed that a significant amount of Ca and B not observed in the graphite cathode charged in the electrolyte without an additive was present in the graphite cathode using the electrolyte according to Example of the present invention.

In addition, the scan of C₁ₛ showed a difference in which a substantial change in the sp2:sp3 hybridization ratio occurred in the graphite negative electrode containing an additive, unlike the graphite negative electrode not containing an additive. Significant deterioration in sp2 carbon strength means that the structure of the graphite negative electrode was partially modified by the inclusion of Ca²⁺ ions in the graphite structure.

### Electrochemical properties

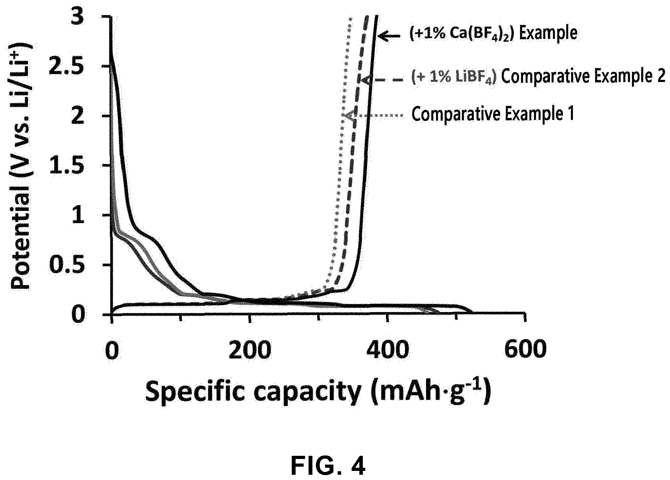

Fig. 4 shows the results of charge and discharge test performed at a rate of 0.01 A/g on half-cells each using the electrolyte according to each of Example and Comparative Examples 1 and 2.

As confirmed in the charge and discharge profile, in the case of Comparative Example 1, the discharge and charge capacities were shown to be 457 mAh/g and 348 mAh/g, respectively.

In addition, in the case of the electrolyte of Comparative Example 2, the discharge and charge capacities were significantly increased compared to Comparative Example 1 to 521 mAh/g and 372 mAh/g. That is, the addition of a small amount of LiBF₄ brought the result of the improvement in capacity so that that the graphite negative electrode could reach a theoretical value. Such improvement in capacity was due to the presence of a trace B (XPS measurement value, figures not included) in the SEI film, which structurally altered the SEI film to allow a larger Li ion flux.

Meanwhile, in the case of Example, there was a more increase in capacity compared with Comparative Example 2. Reversible capacity exceeded a theoretical value of 372 mAh/g so that first discharge and charge capacities of 521 mAh/g and 386 mAh/g were obtained. As such, the increase in charge capacity exceeding a theoretical value may allow Ca²⁺ ions intercalated into graphite to partially occupy Li sites when the Ca²⁺ ions are intercalated into the graphite negative electrode, but may contribute to capacity improvement because the charge is doubled.

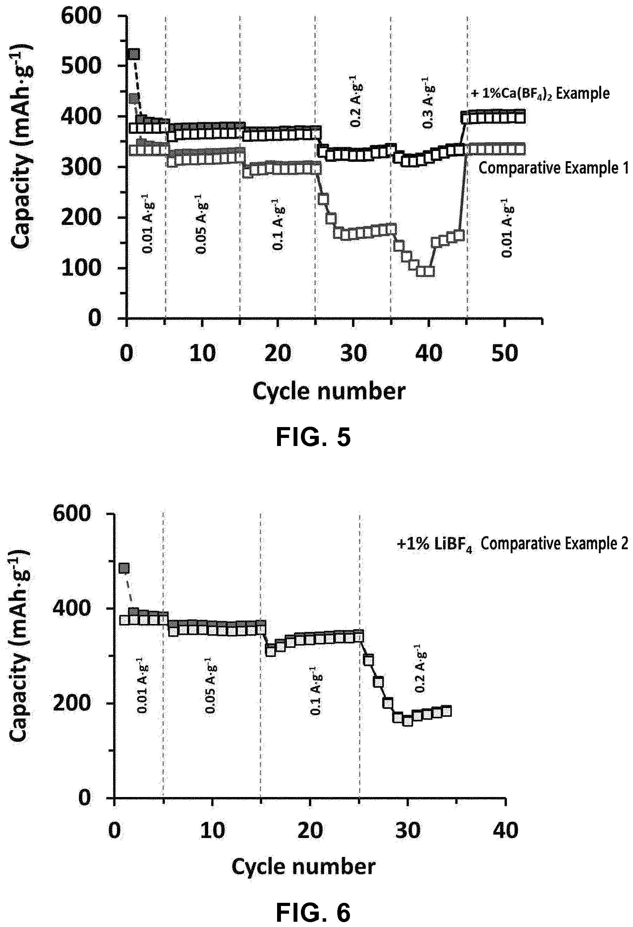

In order to test the battery at different charge/discharge rates, initial adjustment was performed to form a dense SEI film through 5 cycles of charge/discharge at a very slow rate of 0.01 A/g between the 0.01-3.0 V voltage range. Thereafter, while increasing the rate to 0.05 A/g. 0.1 A/g, 0.2 A/g, and 0.3 A/g after 10 cycles each, the cycle test was performed, and the results are shown in Fig. 5.

As confirmed with reference to Fig. 5, in the case of Comparative Example 1 in which an additive was not added, when a current density of 0.1 A/g was exceeded, an excessive loss in capacity was shown. When the rate was reverted back to a slow rate of 0.01 A/g, the capacity was restored, which means that there was a problem in the SEI film rather than the structural damage to graphite.

Meanwhile, in the case of Comparative Example 2 in which 1 wt% of LiBF₄ was included as an additive, as confirmed with reference to Fig. 6, a relatively high capacity of about 337 mAg/g was shown at 0.1 A/g, but the capacity was significantly deteriorated at a rate of 0.2 A/g. This means that B which is present inside the SEI film could not sufficiently serve to allow Li⁺ ions to rapidly move at a high rate.

On the other hand, as confirmed with reference to Fig. 5, in the case of Example of the present invention, high capacities of 364 mAh/g, 328 mAh/g, and 332 mAh/g were shown at high charge and discharge rates of 0.1 A/g, 0.2 A/g and 0.3 A/g, respectively. As confirmed in the structural analysis described above, this is due to the modification of the SEI film so as to have permeability with a high ionic conductivity and a high charge and discharge rate for both Ca²⁺ and Li⁺ ions. In addition, a capacity higher than a theoretical value expected when reverted to a slow charge rate (0.01 A/g) was shown.

As described above, an electrolyte according to the present invention allows Ca²⁺ ions included in an additive to be intercalated/de-intercalated during charging and discharging, thereby increasing reversible capacity. In addition, due to Ca ions present in an SEI film, rapid ion diffusion and permeation of Li ions and the Ca ions at a high charging and discharging rate is promoted, thereby improving the reversible capacity and rate properties of a lithium ion battery.

This research was supported by Creative Materials Discovery Program through the National Research Foundation of Korea (NRF) funded by Ministry of Science, ICT and future (2015M3D1A1069710) and by Basic Science Research Program through the National Research Foundation of Korea (NRF) funded by the Ministry of Education (NRF- 2014R1A6A1030419).

## Claims

1. An electrolyte for a lithium ion battery, the electrolyte comprising an additive containing Ca(BH₄)₂, a lithium salt, and a non-aqueous organic solvent.

2. The electrolyte of claim 1, wherein the electrolyte is used for a negative electrode of a lithium ion battery, the negative electrode including a carbon-based active material.

3. The electrolyte of claim 2, wherein the carbon-based material is graphite.

4. The electrolyte of one of claims 1 to 3, wherein the Ca(BH₄)₂ is contained in an amount of 0.5 to 5 % based on the total weight of the electrolyte.

5. The electrolyte of one of claims 1 to 4, wherein the lithium salt comprises LiPF₆.

6. The electrolyte of one of claims 1 to 5, wherein the non-aqueous organic solvent comprises ethylene carbonate (EC) and dimethyl carbonate (DMC).

7. A lithium ion battery comprising:
a positive electrode;
a negative electrode disposed to face the positive electrode; and
an electrolyte injected between the positive electrode and the negative electrode and set forth in one of claims 1 to 6.

8. The lithium ion battery of claim 7, wherein the negative electrode comprises graphite, and the positive electrode comprises a lithium oxide.

9. The lithium ion battery of claim 7 or 8, wherein during charging and discharging of the lithium ion battery, a solid electrolyte interface (SEI) film formed on the surface of the negative electrode allows simultaneous intercalation and de-intercalation of lithium ions and calcium ions in the negative electrode.
